# EUROPEAN PATENT APPLICATION

(11) **EP 1 489 392 A1**
(43) Date of publication of application: **22.12.2004**
(21) Application number: 03013632.9
(22) Date of filing: 16.06.2003
(51) Int. Cl.: G01F 23/00

(54) **A method for manufacturing an electronic arrangement and an electronic circuit arrangement**

(71) Applicant: SIEMENS AKTIENGESELLSCHAFT, 80333 München (DE)
(72) Inventor: Rumpf, Bernd, 61130 Nidderau (DE)

(57) **Abstract**

A method for manufacturing an electronic circuit device in a motor vehicle fuel tank, the method arranging one or more electronic modules on a substrate, and fixating the substrate with respect to a fuel tank wall. To obtain a permanent separation between electronics and fuel, which is easy to implement, and allows to keep the electronics close to the fuel proper, the method according to the invention encapsulates the one or more electronic modules against the fuel by a cap that connects to the substrate whilst forming an encapsulated space that is separated from any fuel or vapour outside the encapsulated space. The electronic modules may provide various different functional principles, e.g. fuel level measuring or demand regulated fuel pump control.

## Description

A method for manufacturing an electronic arrangement in a motor vehicle fuel tank having one or more electronic modules on a substrate, and a cap that forms with the substrate an encapsulated space separate from any fuel or vapour outside and contains the modules, an electronic circuit arrangement so manufactured, and a fuel tank and a motor vehicle comprising such electronic arrangement.

The invention relates to a method for manufacturing an electronic circuit arrangement in a motor vehicle fuel tank by arranging one or more electronic modules on a substrate, and fixating said substrate with respect to a fuel tank wall.

Prior art has recognized the advantages of electronically implemented functions in a motor vehicle fuel tank, such as measuring carbohydrate fuel levels. However, the present inventor has experienced that in such environment many electronic circuits will have problems regarding the expected duration of their functional life. In particular, carbohydrate fuel or vapours may enter the IC chips and seriously endanger the passivation thereof. It has therefore appeared a problem to provide for the straightforward implementation of electronic devices inside the fuel tank.

In consequence, amongst other things, it is an object of the present invention to provide a method as recited suprea that provides a permanent separation between electronics and fuel, and which is easy to implement, keeps the electronics close to the fuel proper, allows a small apparatus volume as well as being suitable to provide various different functional principles.

Now therefore, according to one of its aspects, the invention is characterized by encapsulating said one or more electronic modules against said fuel by a cap that connects to said substrate whilst forming an encapsulated space that is separated from any fuel or vapour outside said encapsulated space.

The cap therewith forms an electronic box or package useable for any kind of electronic application, for example providing functionalities such as a level sensor or a demand regulated fuel pump control.

The invention also relates to an electronic circuit arrangement in a motor vehicle fuel tank, which arrangement has been manufactured by a method as claimed in Claim 1, to a motor vehicle fuel tank comprising such electronic circuit arrangement, and to a motor vehicle comprising such fuel tank.

Further advantageous aspects of the invention are recited in dependent Claims.

These and further features, aspects and advantages of the invention will be discussed more in detail hereinafter with reference to the disclosure of preferred embodiments of the invention, and in particular with reference to the appended Figures that illustrate:
Figure 1, an exterior view of an electronic circuit arrangement of the invention;
Figure 2, a first cross-sectional view of such electronic circuit arrangement;
Figure 3, a second cross-sectional view of such electronic circuit arrangement;
Figure 4, an overall environment schematic of such electronic circuit arrangement.

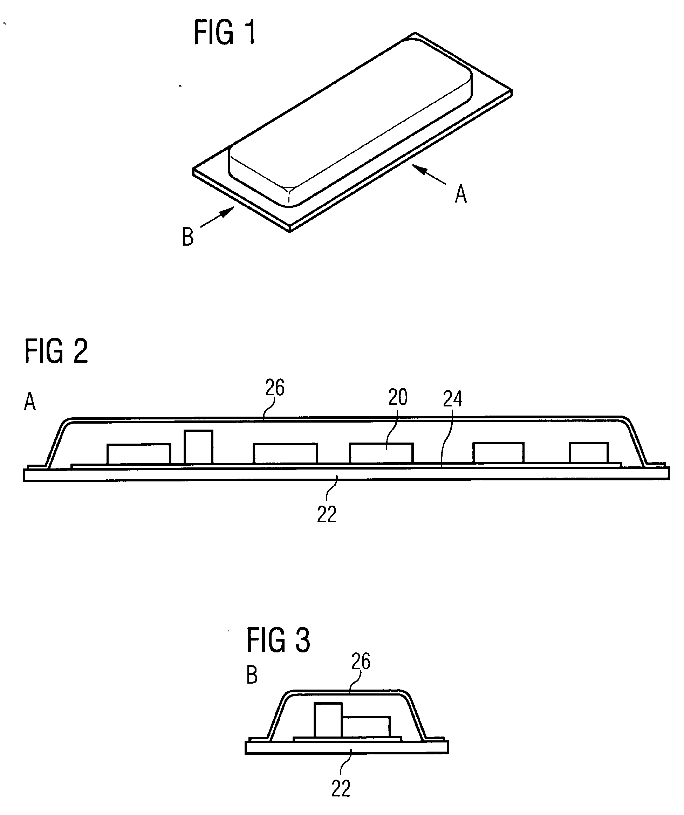

Figure 1 illustrates an exterior view of an electronic circuit arrangement of the invention. The arrangement shown comprises a flat substrate to which a metal cap is fixated, advantageously by soldering to such substrate. Typical dimensions of the overall arrangement would be a length of several ocentimeters, a width of a few centimeters, and a thickness less than one centimeter. However, advancing miniaturization could shrink all dimensions by a factor.

Figure 2 illustrates a first cross-sectional view of such electronic circuit arrangement directed according to the arrow A in Figure 1. As shown, various electronic modules 20 are arranged on a substrate 22 made from ceramic or another suitable material. Such modules may incorporate passive electronic modules, active electronic chips, magnetically driven chips, such as those that are based on the Hall-effect, chips that operate on the basis of ultrasound for measuring a fuel level, and other. In particular, such physics-based measuring technologies have been found advantageous in use. The cap 26 is fixated to ceramic substrate 22 for creating a fully tight encapsulation space where no carbohydrate fuel or vapour could enter from outside. Also located on ceramic substrate 22 are interconnection facilities 24 for interconnecting the various electronic modules. Such interconnection facilities may comprise printed wire disposed on the ceramic substrate, or a separate layer that may comprise aluminum interconnect or other interconnection technologies that would be known to persons skilled in the art.

Figure 3 illustrates a second cross-sectional view of such electronic circuit arrangement according to the arrow B in Figure 1. As shown, cap 26 is soldered to ceramic substrate 22 for creating a fully tight encapsulation space where no carbohydrate fuel or vapour could enter from outside.

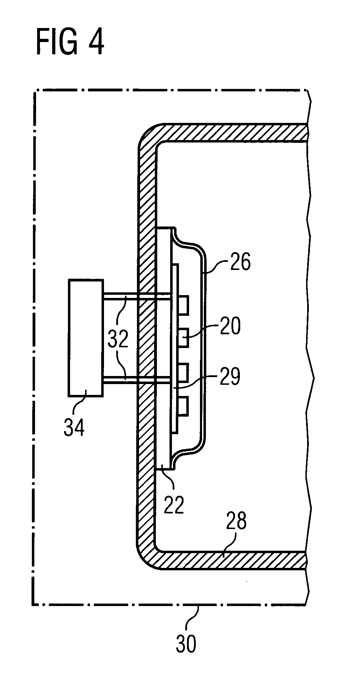

Figure 4 illustrates an overall environment schematic of such electronic circuit arrangement. Items 20-24 and cap 26 have been discussed above. Furthermore, ceramic substrate 22 has been fixated to fuel tank sidewall 28, such as by a suitable adhesive or other means. Fuel tank 28 has been positioned in a motor vehicle that has been indicated by structural facility 30 not further discussed for brevity. Item 34 represents a power supply for the measuring electronics, a reception facility for the fuel level sensing signals, and such other items that would be necessary for measuring a fuel level through a principle that by itself may be known to persons skilled in the art. For simplicity, further user interface related items have been ignored. Items 32 represent electrical through-connections through fuel tank wall 28, such as for providing power or control signals to electronic circuit arrangement 20/24, and/or for outputting measuring signals to the outside. If necessary, further sensing or signal generating facilities other than electronic circuit arrangement 20/24 may be present inside or outside the fuel tank. In certain situations, the sensing of the fuel level may be done inside the tank, but the sensing outcome transmitted through the wall through ultrasound or another principle that need no galvanic interconnection. The minimizing of the number of through-connections through the fuel tank wall allows an improved failure-proof operation.

Now, the present invention has hereabove been disclosed with reference to preferred embodiments thereof. Persons skilled in the art will recognize that numerous modifications and changes may be made thereto without exceeding the scope of the appended Claims. In consequence, the embodiments should be considered as being illustrative, and no restriction should be construed from those embodiments, other than as have been recited in the Claims.

## Claims

1. A method for manufacturing an electronic circuit arrangement in a motor vehicle fuel tank by arranging one or more electronic modules on a substrate, and fixating said substrate with respect to a fuel tank wall,
said method being **characterized by** encapsulating said one or more electronic modules against said fuel by a cap that connects to said substrate whilst forming an encapsulated space that is separated from any fuel or vapour outside said encapsulated space.

2. A method as claimed in Claim 1, being **characterized in that** said cap connects to said substrate by soldering.

3. An electronic circuit arrangement for measuring a fuel level in a motor vehicle fuel tank, comprising one or more electronic modules that are arranged on a substrate, which substrate is suitable for fixating with respect to a fuel tank wall,
said arrangement being **characterized by** comprising said one or more electronic modules protected against said fuel by an encapsulating cap that connects to said substrate whilst forming an encapsulated space that comprises said one or more electronic modules and that is separated from any fuel or vapour outside said encapsulated space.

4. An electronic circuit arrangement as claimed in Claim 3, being **characterized in that** said cap connects to said substrate by soldering.

5. An electronic circuit arrangement as claimed in Claim 3, being **characterized in that** said substrate is a ceramic substrate.

6. An electronic circuit arrangement as claimed in Claim 3, being **characterized in that** said one or more electronic modules comprise a magnetically driven circuit or an ultrasound driven circuit for effecting said measuring.

7. A motor vehicle fuel tank comprising an electronic circuit arrangement as claimed in claim 3.

8. A motor vehicle fuel tank as claimed in Claim 7, being **characterized in that** said substrate comprises one or more electrical through-connections to an outside of said fuel tank.

9. A motor vehicle comprising a fuel tank as claimed in Claim 7.
